# EUROPEAN PATENT SPECIFICATION

(11) **EP 0 817 011 B1**
(45) Date of publication and mention of the grant of the patent: **02.05.2002**
(21) Application number: 96110141.7
(22) Date of filing: 24.06.1996
(51) Int. Cl.: G06F 9/40, G06F 9/46

(54) **An electronic system and method for controlling a digital signal processor**
Elektronische Vorrichtung und Verfahren zur Steuerung eines digitalen Signalprozessors
Dispositif et procédé électronique pour la commande d'un processeur de signal numérique

(43) Date of publication of application: 07.01.1998
(73) Proprietor: MOTOROLA, INC., Schaumburg, IL 60196 (US)
(72) Inventor: Rudin, Yehuda, Netanya 42442 (IL); Klein, Itzik, Kfar Monash 42875 (IL); Hershkovitz, Ophir, Tel Aviv 62916 (IL)
(74) Representative: Richardt, Markus Albert

(56) References cited:
- IBM TECHNICAL DISCLOSURE BULLETIN, vol. 32, no. 7, 1 December 1989, pages 350-353, XP000078125 "REDUCED MICROCODE OVERHEAD USING A SUBROUTINE TABLE ARCHITECTURE IN A CHANNEL-ORIENTED DIGITAL SIGNAL PROCESSOR"
- IBM TECHNICAL DISCLOSURE BULLETIN, vol. 35, no. 4A, 1 September 1992, pages 266-271, XP000314760 "FOREGROUND STATE MACHINE FACILITY FOR MULTI-CHANNEL DATA LINK COMMUNICATIONS"

## Description

### Field of the Invention

This invention generally relates to digital signal processing, and more specifically to the combination of a central processing unit and a digital signal processor.

### Background of the Invention

Digital signal processors (DSP) can be used to realize a wide variety of signal processing functions such as to implement digital filters. Typical digital filter functions are finite impulse response filters (FIR), infinite impulse response filters (IIR), data compression filters, scrambling filters, modulation and demodulation filters, etc. For some filters quadrature amplitude modulation (QAM) is needed. To implement such and other digital signal processing applications (for example data compression and FFT) basically two different approaches are known from the prior art:

One possibility is to use a separate digital signal processor besides the central processing unit. The dedicated digital signal processor gives a general solution for the signal processing required but complicates the entire system, increases the cost and power consumption.

Alternatively it has been suggested to run the digital signal processing applications on the central processing unit. The disadvantage of this approach is that the central processing units capability to handle other tasks diminishes and that the power consumption of the central processing unit is increased.

It is therefore an object of the invention to provide an improved electronic system and method for controlling a digital signal processor.

### Summary of the Invention

The objects of the invention are solved basically by applying the features laid down in the independent claims. Further preferred embodiments of the invention are given in the dependent claims.

The electronic system of the invention allows to run the digital signal processing software concurrently with and independently of the central processing units software. Thereby the central processing units band width left for other system tasks is increased. As compared with the prior art, it is thereby made possible to lower the system clock frequency and voltage to take advantage of the increased central processing units (CPU) band width so that the power consumption can also be decreased.

Furthermore the invention allows to program the CPU software by using function calls to microcode functions which are carried out by the digital signal processor which is embedded in the electronic system. By each function call a complete digital signal processing function can be carried out on the input data. Thereby a programmer of the CPU can use the set of function calls which is provided for the digital signal processor as a tool box for the programming of the electronic system. The only software which has to be programmed by the programmer is the CPU software; no additional digital signal processing software has to be programmed since the digital signal processing functions required for the realization of the electronic system is already provided by the function calls.

It is advantageous to realize the digital signal processor of the electronic system as a low power reduced instruction set computer (RISC) that can handle a library of microcode functions which can be used as building blocks for modem or other DSP applications. This way the DSP can also be realized on the same physical component as the CPU since a DSP which is implemented in RISC technology requires relatively little silicon floor space.

### Brief Description of the Drawing

The invention will be better understood, and other characteristics will appear, from the following description, made with reference to the appended drawings, wherein:
FIG. 1 is a schematic block diagram of a preferred embodiment of an electronic system of the invention;
FIG. 2 is a diagrammatic representation of a finite impulse response digital signal processing function;
FIG. 3 illustrates the coefficient as well as input and output samples of the function of FIG. 2;
FIG. 4 is a diagrammatic representation of a basic modulator function;
FIG. 5 is a diagrammatic representation of the modulation table as well as of the input and output samples of the DSP function of FIG. 4;
FIG. 6 is an overview block diagram of an implementation of a typical DSP task;
FIG. 7 is a more detailed diagrammatic representation of the implementation shown in FIG. 6;
FIG. 8 shows the organization of a circular buffer which is used in the implementation of FIG. 6 and 7;
FIG. 9 schematically illustrates the presence of two independent sequences of function calls in the system memory;
FIG. 10 shows the control flow in the electronic system when a sequence of DSP functions is carried out in parallel to the CPU software; and
FIG. 11 is a flow chart of one embodiment of the method of the invention.

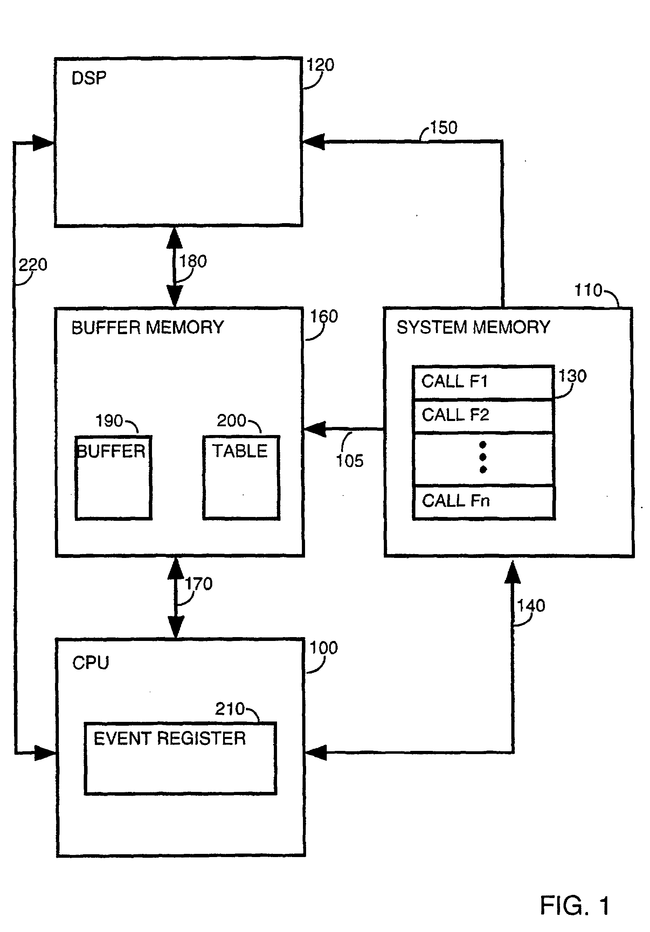

With reference to FIG. 1 now a preferred embodiment of the invention is described in greater detail in the following. The electronic system shown in FIG. 1 has a central processing unit (CPU) 100, system memory 110 and digital signal processor (DSP) 120. The system memory 110 serves to store the program code for the CPU 100. The system memory 110 also stores a sequence of function calls CALL F1, CALL F2, ..., CALL Fn. Each function call in this sequence of function calls 130 triggers the DSP 120 to perform a particular digital signal processing function. The system memory 110 is coupled to the CPU 100 via the bus 140 and to the DSP 120 via the bus 150.

Further, the electronic system of FIG. 1 contains a buffer memory 160. The CPU 100 is coupled to the buffer memory 160 via the bus 170 whereas the DSP 120 is coupled to the buffer memory 160 via bus 180.

The buffer memory 160 comprises a buffer 190 and a table 200. The buffer 190 serves to buffer input and output data from and to the DSP 120 and is used by the functions triggered by the function calls contained in the sequence 130. The table 200 serves for storage of parameter information of the functions which are triggered by the sequence of function calls 130. Prior to the execution of each function the function has to be parameterized. The corresponding parameters are stored in the table 200 by the CPU 100 via the bus 170. The parameters for each function can contain data indicative of the number of coefficients, the coefficients themselves, the output buffer format and size required as well as the input buffer size and the number of iterations of the particular function. The parameters can also contain one or more pointers to specify the appropriate portion of table 200 and buffer 190 which is allocated for a particular function. This is symbolized by the pointer 105 in FIG. 1.

Further, it is possible to specify by means of an appropriate parameter which is stored in the function call sequence 130 by the CPU 100 whether an interrupt request at the end of execution of a particular function is required, whether this function is the last function in the sequence 130 and whether the execution of the sequence 130 of function calls has to stop after the execution of a particular function of this sequence.

The DSP 120 and the CPU 100 are coupled together by the bus 220. If the DSP 120 issues an interrupt in response to one of the microcode functions of the sequence 130, such an interrupt is transmitted via the bus 220 to the CPU 100 and inputted in event register 210 which is comprised within CPU 100. Alternatively, the event register 210 can also form part of the DSP 120 and read by the CPU 100 via the bus 220.

When the electronic system of FIG. 1 is first powered up, the program which is to be carried out by the CPU 100 as well as the sequence 130 of function calls is loaded into the system memory 110. Alternatively one or more additional sequences of function calls can be loaded into the system memory 110. Prior to the execution of the sequence 130 the CPU 100 initializes the buffer memory 160. This is done by storing the appropriate parameter information in the table 200 for each function call contained in the sequence 130.

After this initialization of the electronic system, the program execution can start. The program which is stored for the CPU 100 in the system memory 110 comprises special commands to trigger the execution of the sequence 130. In the preferred embodiment considered here the execution of the sequence 130 of function calls is triggered by the CPU 100 in response to the command "store S" which is a storage command to the base address S of the sequence 130. If the CPU 100 encounters the command store S in the instruction stream this is signaled to the DSP 120 via bus 220. Alternatively, the command for triggering the execution of the sequence can be "start DSP chain" which is issued by the CPU 100 to a special register not shown in the drawing.

In response to this, one function call after the other of the sequence 130 of function calls is transmitted from the system memory 110 via the bus 150 to the DSP 120. For each function call the DSP 120 fetches the appropriate parameter information from the table 200 of the buffer memory 160 via the bus 180. The buffer 190 initially contains the input data for the DSP 120 which serve as an input for the first function F1 of the sequence 130. The result of the processing done by the DSP 120 according to the function F1 is stored as output data in the buffer 190.

For the next function F2 of the sequence 130 the output data of function F1 serve as input data. Likewise the result of the processing performed by *DSP* 120 in accordance with the function call of the function F2 is stored in the buffer 190 and serves as an input for the consecutive function. Thereby a chain of functions F1, F2, ...Fn and a corresponding chain of buffer entries into buffer 190 is created. The processing of the sequence 130 by the DSP 120 is completely independent from the processing of the CPU 100 which can continue to carry out program instructions of its program in parallel to the execution of the sequence 130.

In the example considered here the DSP 120 is a RISC micro-controller which runs concurrently with the CPU 100. Apart from the microcode functions, F1, F2,...Fn no further digital signal processing software is required so that the CPU software is the only application software which is present in the electronic system. Due to the utilization of the RISC technology the silicon floor space required for the implementation of the DSP 120 is relatively small so that both the DSP 120 and the CPU 100 can be implemented on a single chip.

After the execution of the complete sequence 130 by the DSP 120 a maskable interrupt can be generated and there is also a possibility to get a maskable interrupt after the execution of each function contained in the sequence 130 according to the parameters which are set in the table 200 according to the users programming. After the DSP 120 has executed the complete sequence 130 it waits for another command "store S" or - alternatively - "start DSP chain" from the CPU 100 to start the execution of the sequence 130 again. This method gives the user a flexible and easy way to implement an application, such as a modem, by making usage of the predefined functions F1-Fn which are parameterized according to the users requirements.

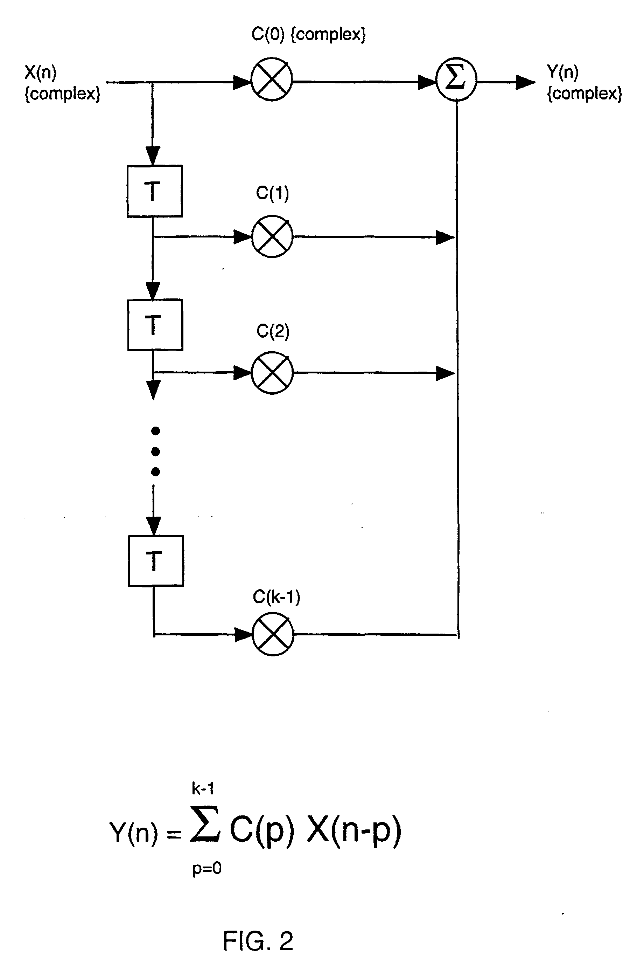

FIG. 2 shows a general example of a finite impulse response digital filter which has complex coefficient C (p), complex input data X and real or complex output dataY. An input value X(n) is multiplied by the first coefficient C(0) and transferred to the second stage of the filter after a time T. After the time T, which is the sampling time, the next input value X (n+1) is inputted and also multiplied with the first coefficient C(0). After this multiplication a summation takes place to sum the multiplied present input value with multiplied previous input values. The result is the output value Y.

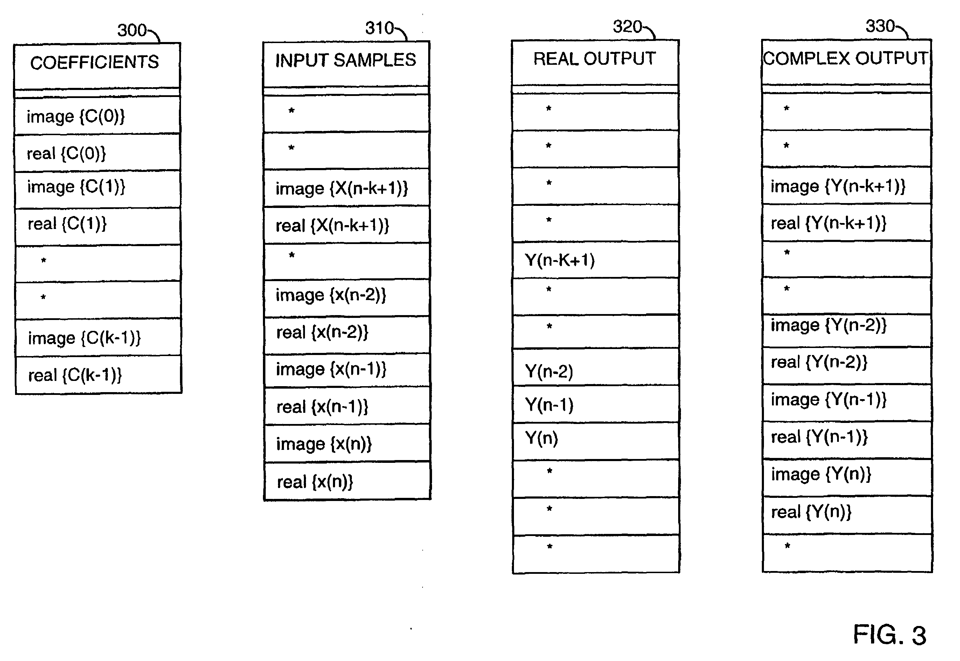

In FIG. 3 the organization of the coefficients C and the organization of the input and output data X, Y is shown in greater detail. Table 300 illustrates the format of the coefficient C, table 310 the format of the input samples X whereas table 320 shows the format of the output values Y in case of a real output and table 330 shows the format of the output values Y in case of a complex output comprising a real and an imaginary part.

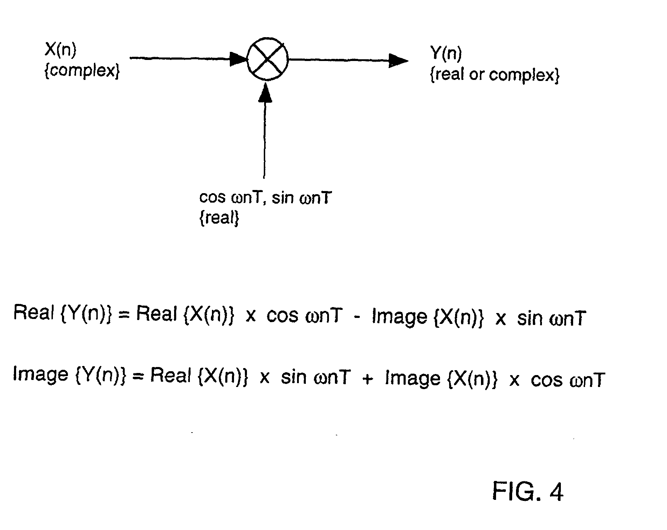

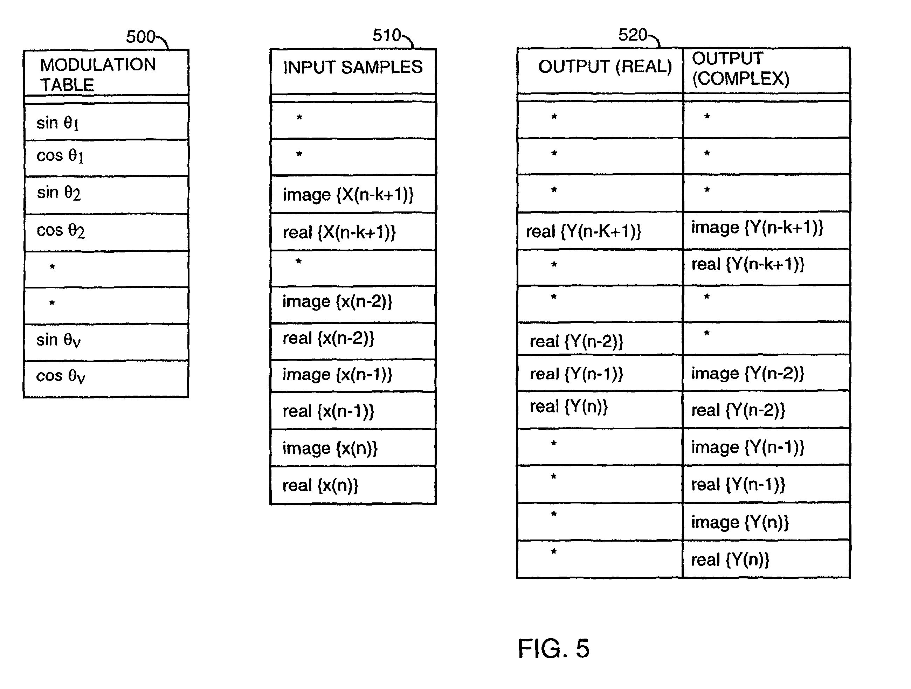

FIG. 4 shows an example for the implementation of a basic modulator function having a modulator table being composed of cosine (cos) and sine (sin) pairs, complex input samples and real output. The corresponding modulation table 500 of the cos. and sin pairs is shown in FIG. 5. The formats for the input and output samples are illustrated by the tables 510 and 520 in FIG. 5.

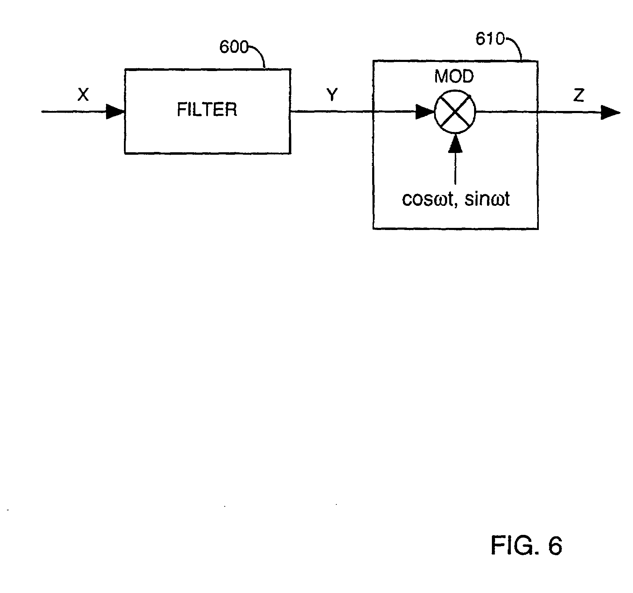

FIG. 6 illustrates the implementation of a typical digital signal processing task. First the input data X is input into a FIR filter of the type shown in FIG. 2 and 3. The output Y of this filter 600 is inputted into the modulator 610 which yields the output value Z. The modulator 610 is a digital filter of the type shown in FIG. 4 and 5.

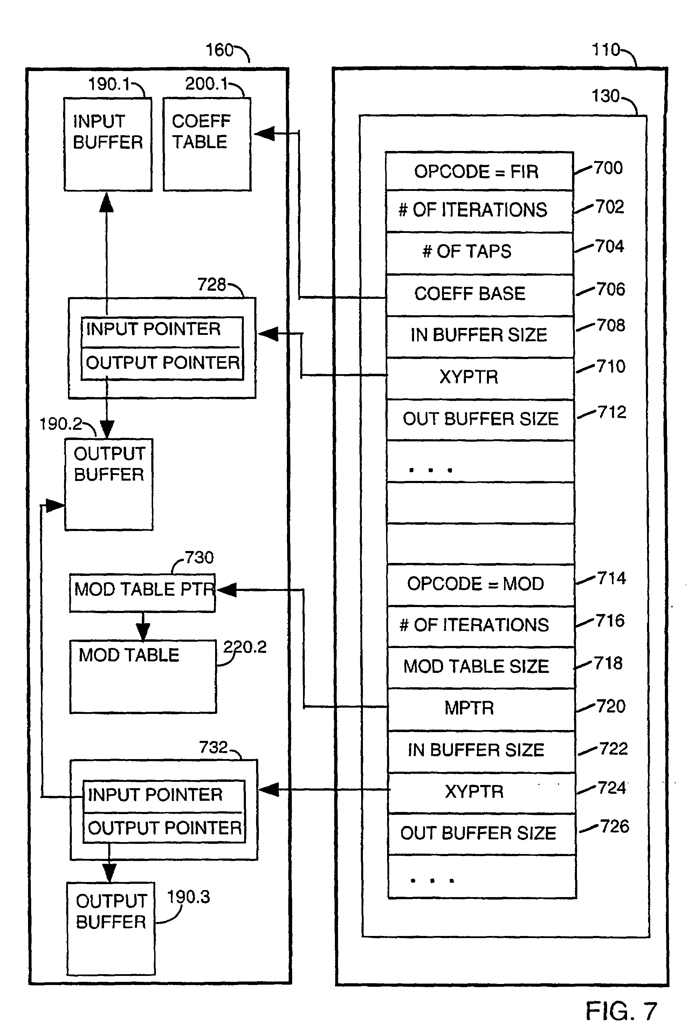

With reference to FIG. 7 now the implementation of the DSP task of FIG. 6 is explained in greater detail. FIG. 7 shows a magnified view of the buffer memory 160 and the system memory 110 of FIG. 1. The sequence 130 of function calls in the example shown in FIG. 7 contains only two function calls in the entries 700 and 714 of the system memory 110. The entry 700 contains a code word or with other words an "OPCODE" which is a function call to a finite impulse response filter (FIR) function of the type shown in FIG. 2 and 3. This function is the first function to be carried out in the sequence 130. The number of iterations of this function is specified in the entry 702. In the example considered here, it is advantageous to repetitively carry out the filter function on the input data for three times.

The number of the coefficient C of the FIR filter function specified in entry 700 is entered into entry 704 "# OF TAPS". The coefficient of the filter function are stored in the coefficient table 200.1 which forms part of the table 200. The base address of the coefficient table 200.1 is specified in the entry 706. Thus the entry 706 "COEFF BASE" constitutes a pointer to the first coefficient C0 stored in the coefficient table 2001.

The entry 708 specifies the size of input buffer 190.1 "IN BUFFER SIZE". The input buffer 190.1 is realized in the buffer 190. The input buffer 190.1 is a certain portion of the total buffer size of the buffer 190 for exclusive usage of the first function in the sequence 130 of function calls.

The entry 710 "XYPTR" contains a pointer to pointer information 728 which is stored in one of the registers of the buffer memory 160. The pointer information 728 contains an input pointer to the input buffer 190.1 as well as an output pointer to the output buffer 190.2. The entry 712 "OUT BUFFER SIZE" specifies the size of the output buffer 190.2. According to the entries 708 and 712 memory space is reserved for the first function of the sequence 130 in the buffers 190 of the buffer memory 160.

As an option the entry 712 can be followed by other entries which also relate to the first function call 700.

The entry 714 contains a code word which specifies the function F2 of the second function call in the sequence 130. In the example considered here F2 is of a type as explained with reference to FIG. 4 and 5. This is to implement a modulator; the corresponding function call is "OPCODE=MOD" in entry 714. Analogous to entry 702 the entry 716 specifies the number of iterations "# OF ITERATIONS" for the second function F2.

The modulation table 500 (cf. FIG. 5) is stored in the modulation table 200.2 which is realized in the table 200. The entry 718 indicates the size of the modulation table 200.2 "MOD TABLE SIZE"; the pointer 730 "MOD TABLE PTR" points to the modulation table 200.2. The modulation table pointer 730 is stored in one of the registers of the buffer memory 160. The entry 720 in the sequence 130 points to the modulation table pointer 730.

The entry 722 "IN BUFFER SIZE" specifies the input buffer size for the second function F2; this entry corresponds to the size of the output buffer 190.2 of the first function F1 in the sequence 130 since the output buffer 190.2 is used as the input buffer for the consecutive function F2 of the sequence 130. Like the entry 710 for the first function F1 the entry 724 "XYPTR" points to pointer information 732. The pointer information 732 is stored in one of the registers of the buffer memory 160. The pointer information 732 contains an input and an output pointer. The input pointer points to the output buffer 190.2 of the previous function F1. The output pointer of the pointer information 732 points to the output buffer 190.3 of the second function F2. The output buffer 190.3, like the output buffer 190.2, forms part of the buffer 190.

The entry 726 specifies the size of the output buffer 190.3 "OUT BUFFER SIZE". Since there is no further function call in the exemplary sequence 130 of FIG. 7 the output buffer 190.3 contains the final result of the processing of the data which are inputted into input buffer 190.1.

Since an output buffer of a proceeding function always serves as an input buffer for a consecutive function, the functions contained in the sequence 130 are concatenated into a chain.

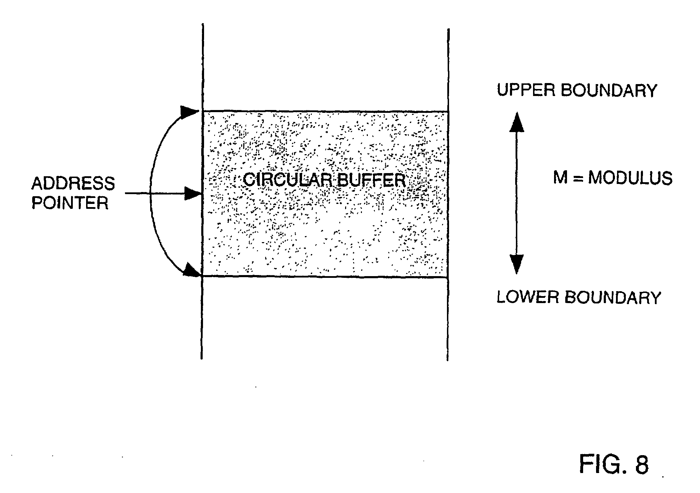

The input and output buffers shown in FIG. 7 can be realized as circular buffers in the buffer 190. This is explained in more detail with reference to FIG. 8. The input and output buffers are circular with a programmable size. The lower boundary (base address) of a circular buffer containing M bits must have zeros in the k least significant bits, where 2^{k}≥M, and therefore must be a multiple of 2^{k}. The upper boundary is the lower boundary plus the size -1 (base address+M-1). Once M is chosen, a sequential series of memory blocks each of length 2^{k} is created where these circular buffers can be located. If M<2^{k}, there is a space of 2^{k}-M between sequential circular buffers of size M. Preferably M is a multiple of 4. This type of buffer organization is also called modular addressing.

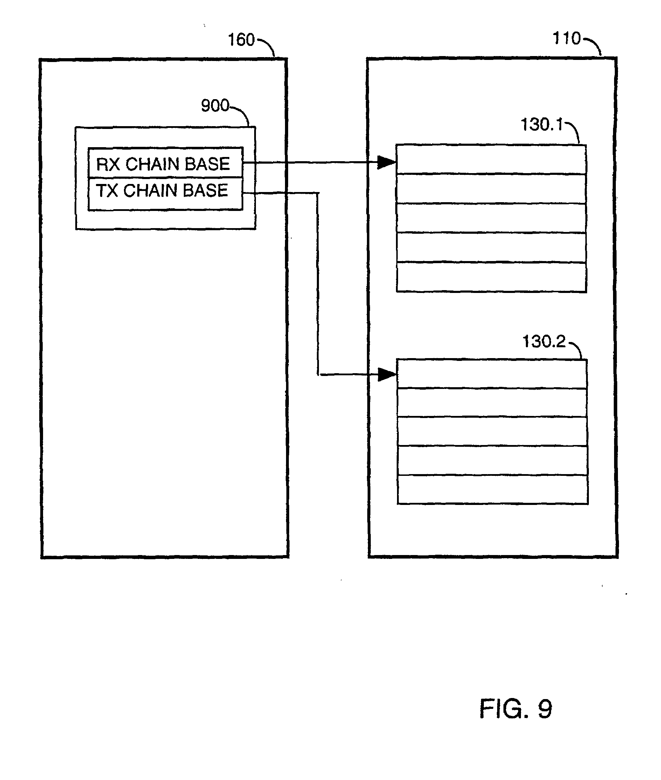

The electronic system of FIG. 1 can also be programmed to contain more than one sequence of function calls. In FIG. 9 only the system memory 110 and the buffer memory 160 of the electronic system of FIG. 1 is shown for simplicity. In the example of FIG. 9 there are two sequences 130.1 and 130.2 of function calls. The sequence 130.1 contains function calls for the reception of data where as the sequence 130.2 contains function calls for the transmittal of data in order to realize a modulator/demodulator.

In addition to what is shown in FIG. 7 the buffer 160 contains pointer information 900. The first pointer contained in pointer information 900 is "RX CHAIN BASE" which points to the beginning of the sequence 130.1. The second pointer of pointer information 900 "TX CHAIN BASE" points to the beginning of the sequence 130.2. If the programmer wants the electronic system to carry out the sequence 130.1 this can be done by means of a program command store "S1" whereas the execution of the sequence 130.2 can be triggered by a corresponding command store "S2", where S1 and S2 are representative of the RX CHAIN BASE and the TX CHAIN BASE, respectively. Alternatively, the CPU can start a chain by writing a command to a special register which is not shown in the drawing.

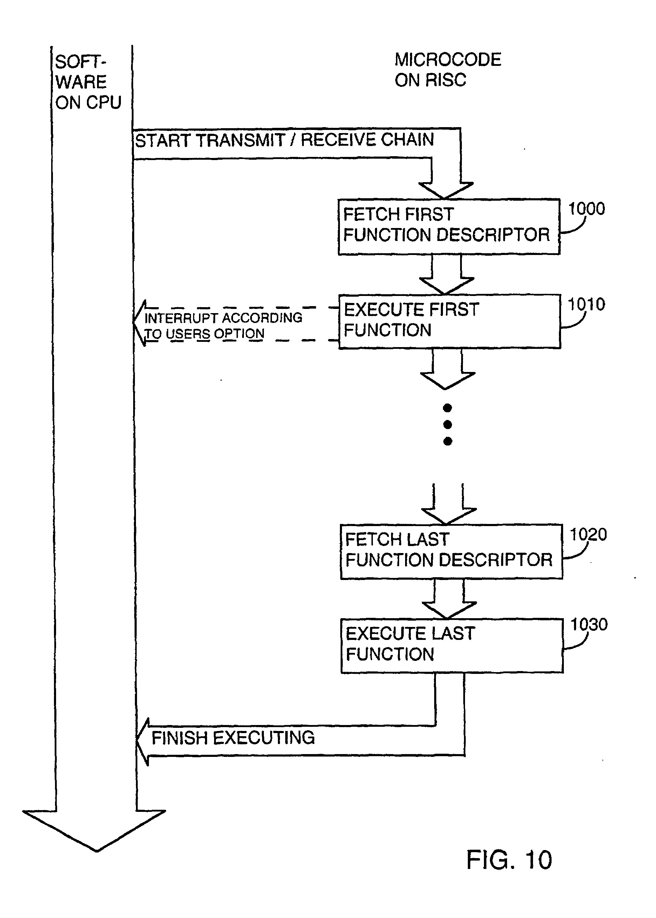

FIG. 10 illustrates the parallel execution of commands on the CPU 100 and on the digital signal processor 120. If the CPU 100 encounters a command of the type store S or store "RX CHAIN BASE" or store "TX CHAIN BASE" in the instruction stream the CPU 100 notifies the DSP 120 via bus 220 that a sequence of functions is to be carried out. If there is more than one sequence 130 stored in the system memory 110 this notification of the CPU 100 to the DSP 120 contains information as to the selection of the appropriate sequence which is to be carried out. In response to this, the DSP 120 fetches the first function call "call F1" from the sequence 130 together with the list of function descriptors 702 to 712 (cf. FIG. 7).

These data are transmitted via the bus 150 to the DSP 120. The DSP 120 accesses the buffer memory 160 via bus 180 in compliance with the information received from the system memory 110. With other words the DSP 120 accesses the coefficient table 200.1 to parameterize the function to be carried out and subsequently the data stored in input buffer 190.1 to filter these data correspondingly.

The result of this filter operation is stored into output buffer 190.2. After the first function is executed an interrupt can be carried out according to the programmers option. This corresponds to the steps 1000 and 1010, respectively of FIG. 10. Subsequently the next function call F2 together with its function descriptors is fetched in the same way by DSP 120 and the data contained in the output buffer 190.2 of the previous function call are processed correspondingly. After the last function call Fn together with its function descriptor is fetched in step 1020 and the last function Fn of the sequence 130 is executed in step 1030 the processing of the DSP 120 finishes. When another instruction of the type store S is encountered in the instruction stream, the DSP 120 is reactivated to carry out the same or another sequence 130.

In parallel to the execution of the sequence 130 on the DSP 120 the instruction stream continuos to be processed on the CPU 100.

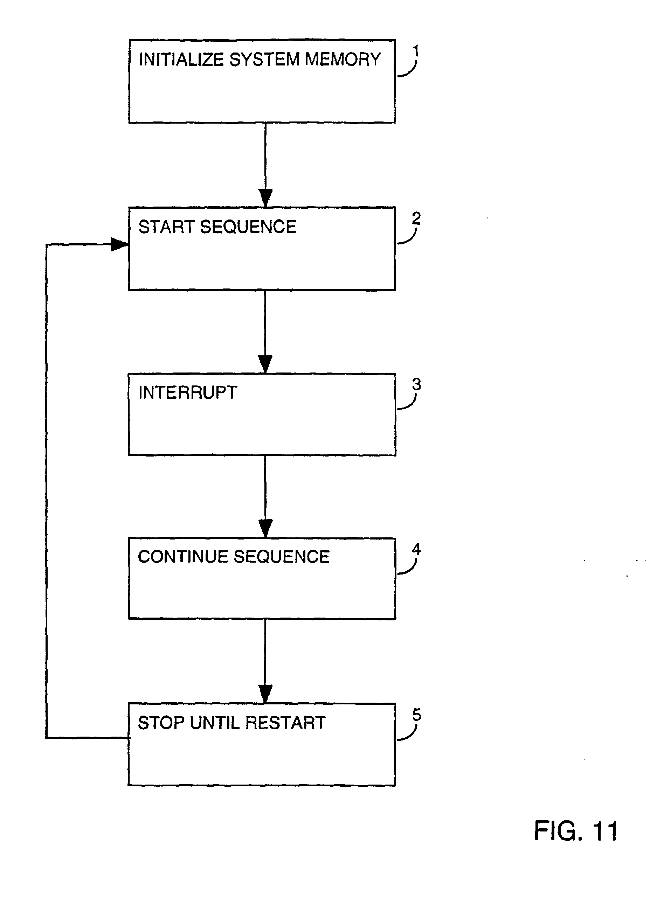

FIG. 11 illustrates a preferred embodiment of method of the invention. In step 1 the CPU 100 initializes the system memory 110 and the buffer memory 160. This means that the sequence of functions 130 or the sequences of functions 130.1 and 130.2 are stored in the system memory 110 and that the corresponding information is entered into the table 200 and also that the appropriate pointer information 728, 732 and 900 is entered into the appropriate registers of buffer memory 160. In response to a special command of the type "store S" in the instruction stream, the CPU 100 causes the DSP 120 to start processing the sequence 130. At the users option the processing of the sequence 130 can be interrupted in step 3 and resumed in step 4. When all function calls in the sequence 130 have been processed the DSP 120 stops in step 5 until it is restarted by the CPU 100.

## Claims

1. An electronic system comprising
a central processing unit (100) and digital signal processor means (120);
said digital signal processor means being adapted to carry out a library of microcode functions;
means (110) for storing a sequence of function calls to said microcode functions, said function calls comprising parameter information for said microcode functions, said parameter information being provided by said central processing unit prior to an execution of said sequence of function calls.

2. The electronic system of claim 1 said library of microcode functions comprising finite and/or infinite impulse response filters and/or modulation and/or demodulation filters.

3. The electronic system of claim 1 said means for storing a sequence of function calls being realized in a system memory (110) of said electronic system, said parameter information being comprised in said function calls having a pointer (105, 706) to a table (200, 200.1) of parameters.

4. The electronic system of claim 3 further comprising memory means (160) accessible to said central processing unit and said digital signal processor means, said memory means being adapted to store said table (200, 200.1) of parameters.

5. The electronic system of claim 4 said memory means (160) being adapted to provide a number of cascaded circular buffers (190), each of said buffers belonging to one of said functions of said sequence of function calls, an output buffer of a preceding function serving as an input buffer of a consecutive function.

6. The electronic system of claim 1 comprising means for triggering the execution of said sequence of function calls by said central processing unit, said central processing unit being adapted to continue its operation while said digital signal processor means carries out said sequence of microcode functions.

7. The electronic system of claim 5 comprising means to interrupt said operation of said central processing unit in response to one of said microcode functions of said sequence.

8. A method for controlling a digital signal processor, said digital signal processor being adapted to carry out a library of microcode functions, said method comprising the steps of:
storing a sequence of function calls to said microcode functions, said function calls comprising parameter information for said microcode functions, said parameter information being provided by a central processing unit;
triggering an execution of said sequence of function calls by said digital signal processing means.

9. The method of claim 8 further comprising the steps of
storing the result of a first function of said sequence of functions in a first circular buffer;
using said first circular buffer as an input buffer for a consecutive second function of said sequence of functions.

10. A method for controlling an electronic system comprising a central processing unit and digital signal processing means, said method comprising the method steps of claim 8 or 9 and the further step of
continuing an operation of said central processing unit during said execution of said sequence of function calls.

11. The method of claim 10 further comprising the step of
interrupting said operation of said central processing unit during said execution in response to one of said microcode functions of said sequence.

## Patentansprüche

1. Elektronisches System mit
einer zentralen Verarbeitungseinheit (100) und digitalen Signalverarbeitungsmitteln (120) ;
wobei die digitalen Signalverarbeitungsmittel geeignet sind, um eine Bibliothek von Microcode-Funktionen auszuführen;
Mitteln (110) zum Speichern einer Sequenz von Funktionsrufen an die Microcode-Funktionen, wobei die Funktionsrufe Parameterinformation für die Microcode-Funktionen umfassen, wobei die Parameterinformation durch die zentrale Verarbeitungseinheit vor einer Ausführung der Sequenz von Funktionsrufen zur Verfügung gestellt wird.

2. Elektronisches System nach Anspruch 1, wobei die Bibliothek von Microcode-Funktionen finite und/oder infinite Impulsantwortfilter ("impulse response filters") und/oder Modulations- und/oder Demodulationsfilter aufweist.

3. Elektronisches System nach Anspruch 1, wobei die Mittel zum Speichern einer Sequenz von Funktionsrufen in einem Systemspeicher (110) des elektronischen Systems realisiert sind, wobei die Parameterinformation in den Funktionsrufen mit einem Zeiger (105, 706) auf eine Tabelle (200, 200.1) von Parametern enthalten ist.

4. Elektronisches System nach Anspruch 3, welches weiterhin Speichermittel (160) umfasst, auf die durch die zentrale Verarbeitungseinheit und die digitalen Signalverarbeitungsmittel zugegriffen werden kann, wobei die Speichermittel geeignet sind, die Tabelle (200, 200.1) von Parametern zu speichern.

5. Elektronische System nach Anspruch 4, wobei die Speichermittel (160) geeignet sind, um eine Anzahl von kaskadierten zirkulären Puffern (190) zur Verfügung zu stellen, wobei jeder der Puffer zu einer der Funktionen der Sequenz von Funktionsrufen gehört, wobei ein Ausgangspuffer von einer vorangehenden Funktion als ein Eingangspuffer einer nachfolgenden Funktion dient.

6. Elektronisches System nach Anspruch 1 mit Mitteln zum Triggern der Ausführung der Sequenz von Funktionsrufen durch die zentrale Verarbeitungseinheit, wobei die zentrale Verarbeitungseinheit geeignet ist, ihren Betrieb fortzusetzen, während die digitalen Signalverarbeitungsmittel die Sequenz von Microcode-Funktionen ausführen.

7. Elektronisches System nach Anspruch 5 mit Mittel zum Unterbrechen der Operation der zentralen Verarbeitungseinheit als Antwort auf eine der Microcode-Funktionen aus der Sequenz.

8. Verfahren zum Steuern/Regeln eines digitalen Signalprozessors, wobei der digitale Signalprozessor geeignet ist, eine Bibliothek von Microcode-Funktionen auszuführen, wobei das Verfahren die Schritte umfasst:
Speichern einer Sequenz von Funktionsrufen zu den Microcode-Funktionen, wobei die Funktionsrufe Parameterinformation für die Microcode-Funktionen umfassen, wobei die Parameterinformation durch eine zentrale Verarbeitungseinheit zur Verfügung gestellt wird;
Triggern einer Ausführung der Sequenz von Funktionsrufen durch die digitalen Signalverarbeitungsmittel.

9. Verfahren nach Anspruch 8, welches weiterhin die Schritte aufweist:
Speichern des Ergebnisses von einer ersten Funktion der Sequenz von Funktionen in einem ersten zirkulären Puffer;
Verwenden des ersten zirkulären Puffers als ein Eingangspuffer für eine nachfolgende zweite Funktion der Sequenz von Funktionen.

10. Verfahren zum Steuern/Regein eines elektronischen Systems mit einer zentralen Verarbeitungseinheit und digitalen Signalverarbeitungsmitteln, wobei das Verfahren die Verfahrensschritte von Anspruch 8 oder 9 und den weiteren Schritt aufweist:
Fortsetzen einer Operation der zentralen Verarbeitungseinheit während des Ausführens der Sequenz von Funktionsanrufen.

11. Verfahren nach Anspruch 10, welches weiterhin den Schritt aufweist:
Unterbrechen der Operation der zentralen Verarbeitungseinheit während des Ausführens als Antwort auf eine der Microcode-Funktionen von der Sequenz.

## Revendications

1. Système électronique comprenant :
une unité centrale de traitement (100) et un moyen de processeur de signal numérique (120),
ledit moyen de processeur de signal numérique étant adapté pour mettre en oeuvre une bibliothèque de fonctions microcode,
un moyen (110) pour stocker une séquence d'appels de fonction sur lesdites fonctions microcode, lesdits appels de fonction comprenant une information de paramètre pour lesdites fonctions microcode, ladite information de paramètre étant constituée par ladite unité centrale de traitement avant une exécution de ladite séquence d'appels de fonction.

2. Système électronique selon la revendication 1, ladite bibliothèque de fonctions microcode comprenant des filtres à réponse impulsionnelle finie et/ou infinie et/ou des filtres de modulation et/ou de démodulation.

3. Système électronique selon la revendication 1, ledit moyen pour stocker une séquence d'appels de fonction étant réalisé dans une mémoire système (110) dudit système électronique, ladite information de paramètre étant constituée dans lesdits appels de fonction en présentant un pointeur (105, 706) sur une table (200, 200.1) de paramètres.

4. Système électronique selon la revendication 3, comprenant en outre un moyen de mémoire (160) qui est accessible pour ladite unité centrale de traitement et pour ledit moyen de processeur de signal numérique, ledit moyen de mémoire étant adapté pour stocker ladite table (200, 200.1) de paramètres.

5. Système électronique selon la revendication 4, ledit moyen de mémoire (160) étant adapté pour constituer un certain nombre de tampons circulaires en cascade (190), chacun desdits tampons appartenant à l'une desdites fonctions de ladite séquence d'appels de fonction, un tampon de sortie d'une fonction précédente jouant le rôle de tampon d'entrée d'une fonction consécutive.

6. Système électronique selon la revendication 1, comprenant un moyen pour déclencher l'exécution de ladite séquence d'appels de fonction au moyen de ladite unité centrale de traitement, ladite unité centrale de traitement étant adaptée pour poursuivre son fonctionnement tandis que ledit moyen de processeur de signal numérique met en oeuvre ladite séquence de fonctions microcode.

7. Système électronique selon la revendication 5, comprenant un moyen pour interrompre ledit fonctionnement de ladite unité centrale de traitement en réponse à l'une desdites fonctions microcode de ladite séquence.

8. Procédé pour commander un processeur de signal numérique, ledit processeur de signal numérique étant adapté pour mettre en oeuvre une bibliothèque de fonctions microcode, ledit procédé comprenant les étapes de :
stockage d'une séquence d'appels de fonction sur lesdites fonctions microcode, lesdits appels de fonction comprenant une information de paramètre pour lesdites fonctions microcode, ladite information de paramètre étant constituée par une unité centrale de traitement ; et
déclenchement d'une exécution de ladite séquence d'appels de fonction au moyen dudit moyen de traitement de signal numérique.

9. Procédé selon la revendication 8, comprenant en outre les étapes de :
stockage du résultat d'une première fonction de ladite séquence de fonctions dans un premier tampon circulaire ; et
utilisation dudit premier tampon circulaire en tant que tampon d'entrée pour une seconde fonction consécutive de ladite séquence de fonctions.

10. Procédé de commande d'un système électronique comprenant une unité centrale de traitement et un moyen de traitement de signal numérique, ledit procédé comprenant les étapes de procédé de la revendication 8 ou 9 et l'étape supplémentaire consistant à poursuivre un fonctionnement de ladite unité centrale de traitement pendant ladite exécution de ladite séquence d'appels de fonction.

11. Procédé selon la revendication 10, comprenant en outre l'étape consistant à interrompre ledit fonctionnement de ladite unité centrale de traitement pendant ladite exécution en réponse à l'une desdites fonctions microcode de ladite séquence.
